# EUROPÄISCHE PATENTSCHRIFT

(11) **EP 2 589 477 B1**
(45) Veröffentlichungstag und Bekanntmachung des Hinweises auf die Patenterteilung: **09.03.2016**
(21) Anmeldenummer: 11187770.0
(22) Anmeldetag: 03.11.2011
(51) Int. Cl.: B29C 44/56, B29K 25/00

(54) **Kunststoffschaumplatte und Verfahren zur Bearbeitung von flächigen Kunststoffschaumplatten**
Plastic foam sheet and method for processing of flat plastic foam sheets
Plaque en mousse synthétique et procédé de traitement des plaques de mousse synthétique

(43) Veröffentlichungstag der Anmeldung: 08.05.2013
(73) Patentinhaber: Mostafa, Kamal, Gizeh (EG)
(72) Erfinder: Mostafa, Kamal, Gizeh (EG)
(74) Vertreter: Eisenführ Speiser

(56) Entgegenhaltungen:
- EP-A1- 0 561 216
- EP-A1- 0 792 732
- US-A- 3 443 007
- US-A- 4 299 883
- US-A- 5 520 873
- US-A1- 2008 003 421
- US-A1- 2011 229 693

## Beschreibung

Die Erfindung betrifft ein Verfahren zur Bearbeitung von flächigen Kunststoffschaumplatten (10), wobei die flächigen Kunststoffschaumplatten (10) mindestens aufweisen:
▪ eine vorderseitige Oberfläche (11) und eine der vorderseitigen Oberfläche (11) gegenüberliegende rückseitige Oberfläche (12),
▪ eine durch die vorder- und rückseitige Oberfläche (11, 12) begrenzte anfängliche Dicke (D₁).

Derartige Kunststoffschaumplatten (10) sind beispielsweise bekannt in Form handelsüblicher und seit geraumer Zeit bekannter Polystyrolschaumplatten (XPS und EBS) insbesondere in extrudierter und expandierter Ausführungsform. Die in dieser Form bekannten Bau-Polystyrolschaumplatten weisen im Allgemeinen gute Isolierungseigenschaften bzw. niedrige Wärmeleitfähigkeiten λ von ca. 0,03 - 0,04 W/mK auf.

Um den steigenden Anforderungen der Energieeinsparung gerecht zu werden, werden die aus bautechnischen Gründen gewählten Dämmstoffe immer dicker, wodurch wertvoller Innenraum - in Form von so genannter grauer Energie - verloren geht. Daher und aus anderen Gründen sind Verbesserungen der Isolierwerte von Dämmstoffen stets gefragt. Es besteht vor diesem Hintergrund zunächst die Aufgabe nach verbesserten Wärmedämmstoffen für die Bauindustrie und/oder nach Verfahren, bekannte Wärmedämmstoffe hinsichtlich ihres Wärmeisolationsverhaltens zu verbessern. Gleichzeitig besteht ein grundsätzliches Interesse daran, auch andere Eigenschaften der grundsätzlich bekannten Kunststoffschaumplatten, wie beispielsweise deren Wasseraufnahme und Druckfestigkeit, zu optimieren, wobei diese Aspekte weniger im Vordergrund der vorliegenden Erfindung stehen.

Einige frühere Entwicklungen in dieser Richtung sind beispielsweise aus den Schriften der US 2011-0,064,938 A1, EP 0 863 175 A2, EP 0 372 343 B1 und EP 1 486 530 A1 bekannt, innerhalb derer man beispielsweise Ruß oder Graphit als Additive von Kunststoffschaumplatten vorschlägt, womit eine mehr oder weniger starke Reduzierung der Wärmeleitfähigkeit von Polystyrolschaumplatten als herauszustellender Erfolg erreicht werden konnte. Als nachteilig ist jedoch gleichzeitig festzuhalten, dass diese Produkte eine sehr dunkle Farbe aufweisen, was auf Baustellen immer wieder zu Verwölbungsproblemen aufgrund ihrer zu starken Aufheizung führte und auch aktuell führt. Ein weiterer Nachteil von Kunststoffschaumplatten mit Ruß- oder Graphitbestandteilen ist deren wesentlich höherer Preis.

EP 0 561 216 A1 offenbart eine Schaumstoffplatte und ein Verfahren zu deren Herstellung. Die Schaumstoffplatte wird mit Hilfe von Presswerkzeugen über eine vorbestimmte Zeitdauer zusammengepresst. Durch das Zusammenpressen wird eine irreversible Verformung des Zellgefüges der Schaumstoffplatte erreicht, wodurch die Schaumstoffplatte nach dem Pressvorgang eine verringerte Dicke im Vergleich zur Ausgangsdicke vordem Pressen hat.

Das Ziel der Erfindung besteht also auch darin, eine möglichst einfache und ökonomische Lösung zu finden, um die Wärmeleitfähigkeit traditioneller Kunststoffschaumplatten zu vermindern und demzufolge höhere Energieeinsparungen bei geringerer Dicke zu erreichen.

In Abkehr von den bisherigen Lösungsvorschlägen sieht die vorliegende Erfindung ein Verfahren zur Bearbeitung von flächigen XPS oder EBS Kunststoffschaumplatten (10) vor, gemäß Anspruch 1. Sowie eine flächige XPS oder EBS Kunststoffschaumplatte gemäß Anspruch 10.

Grundsätzlich ist es bekannt, dass die Wärmeisoliereigenschaften von Kunststoffschaumplatten stark von der Struktur und der Größe der Zellen des aufgeschäumten Kernmaterials innerhalb der Kunststoffschaumplatten abhängig sind. Die Zellengröße eines herkömmlichen XPS-Schaumes liegt in einem Bereich zwischen 0,12 mm und 0,28 mm.

Die Schaumzellenstruktur und -größe werden unter anderem vom Expansions- bzw. Extrusionsprozess und insbesondere von den angewendeten Treibmitteln beeinflusst. Eine noch größere Rolle spielt allerdings die Dicke der hergestellten Kunststoffschaumplatten: je größer deren Plattendicke ist, desto größer sind auch die Zellenabmessungen - insbesondere in Richtung der Plattendicke - was eine deutliche Verschlechterung der Isolierungseigenschaften dickerer Platten mit sich bringt. Deshalb hat man bereits zu früheren Zeiten vorgeschlagen, dickere Platten durch Aufstaplung bzw. Klebung dünnerer Platten zu gewinnen.

Die vorliegende Erfindung löst die zu Grunde liegende Aufgabe durch Pressen von flächigen Kunststoffschaumplatten (10), die beispielsweise zuvor nach herkömmlicher Aufbau- und Herstellungsart produziert wurden und dabei aufweisen:
▪ eine vorderseitige Oberfläche (11) und eine der vorderseitigen Oberfläche (11) gegenüberliegende rückseitige Oberfläche (12),
▪ eine durch die vorder- und rückseitige Oberfläche (11, 12) begrenzte anfängliche Dicke (D₁),
▪ aufgeschäumtes Kernmaterial mit gasgefüllten Zellen.

Das erfindungsgemäße Pressen der flächigen Kunststoffschaumplatte (10) bewirkt bei dieser zunächst sowohl eine reversible wie auch eine irreversible Stauchung, wobei die Dicke der flächigen Kunststoffschaumplatte (10) unmittelbar am Ende des Pressvorgangs (D₃) beträgt. Nach Entfernen der Pressflächen vergrößert sich die Dicke der flächigen Kunststoffschaumplatte (10) wieder und nimmt schließlich dauerhaft den Wert für die Dicke (D₂) gemäß irreversibler Stauchung der Kunststoffschaumplatte (10) an, mit: (D₃) < (D₂) < (D₁).

Bei der irreversiblen Stauchung der Kunststoffschaumplatte (10) wird die Zellengröße in Pressrichtung bzw. in Richtung der Plattendicke kleiner und in Richtung der Plattenebene größer, was zu einer signifikanten Verbesserung der Wärmeisolierungseigenschaften der Kunststoffschaumplatte (10) in Pressrichtung führt.

Entsprechend den Erkenntnissen, zu die der Erfinder im Rahmen seiner vorliegenden Erfindung gelangte, liegt die irreversible Stauchung
□ in einem Bereich von größer 0% bis einschließlich 80%, bezogen auf die anfängliche Dicke (D₁) der gepressten flächigen Kunststoffschaumplatte (10) und
□ in einem Bereich von einschließlich 10% bis einschließlich 40%, erneut bezogen auf die anfängliche Dicke (D₁) der gepressten flächigen Kunststoffschaumplatte (10).

Entsprechend den Erkenntnissen des Erfinders wird während des Verfahrensschrittes des Pressens fast das gesamte, bevorzugt das gesamte Gas in den Zellen des aufgeschäumtes Kernmaterials aus der flächigen Kunststoffschaumplatte (10) herausgedrückt. Erst beim Vorgang der erneuten Ausdehnung der Kunststoffschaumplatte (10), beginnend bei der Dicke unmittelbar am Ende des Pressvorgangs (D₃) bis zur dauerhaft gehaltenen Dicke (D₂) gemäß irreversibler Stauchung werden die Zellen durch ein Füllgas gefüllt, die dem Umgebungsraum während der erneuten Ausdehnung entnommen wird. Dabei stellt es eine bevorzugte Ausführung des vorgeschlagenen Verfahrens wie der vorgeschlagenen flächigen Kunststoffschaumplatte (10) dar, wenn dieses Füllgas insbesondere frei von jeglichen Treibmitteln ist. Ganz besonders bevorzugt wird Luft als Füllgas benutzt, die gegebenenfalls Zusätze enthalten kann wie Duftstoffe und/oder Fungizide.

Entscheidend ist jedoch, dass die Gasfüllung in den Zellen des aufgeschäumtes Kernmaterials frei wählbar ist und mit Blick auf die Erstfüllung ausgetauscht wird im Rahmen des hier vorgeschlagenen Verfahrens, womit das aufgeschäumte Kernmaterial der nach dem hier vorgeschlagenen Verfahren bearbeiteten Kunststoffschaumplatten (10) keine oder so gut wie keine Treibmittel mehr enthält. Da sich die hier vorgeschlagene Kunststoffschaumplatte (10) nach ihrer Ausdehnung mit der Annahme ihrer endgültigen Dicke (D₂) gemäß irreversibler Stauchung in einem statischen Zustand befindet, wird sich auch der λ-Wert als Maßzahl der Wärmeleitfähigkeit der vorgeschlagenen flächigen Kunststoffschaumplatte (10) innerhalb der sich anschließenden Alterung (*das ist die Zeit, innerhalb der bei traditionellen Kunststoffschaumplatten die verwendeten Treibmittel fast vollständig aus den Platten ausdiffundieren; die Alterung liegt somit in einem zeitlichen Bereich von einigen Monaten bis hin zu wenigen Jahren*) nicht mehr ändern bzw. erhöhen, da in den Schaumzellen gerade nur Luft verbleibt und sich so ein Ausdiffundieren, wie es bei flüchtigen Treibgasen immer zu beobachten ist, nicht ergibt.

Damit die primäre, Treibmittel enthaltende Gasfüllung in den Zellen des aufgeschäumtes Kernmaterials während des Pressens rascher heraus diffundieren kann, ist es vorteilhaft und stellt eine bevorzugte Ausführungsform dar, wenn das hier vorgeschlagene Verfahren vor dem Pressen eine Oberflächenbehandlung der zugeführten Kunststoffschaumplatten (10) umfasst, wobei die Oberflächenbehandlung ein Verfahrensschritt ist, ausgesucht aus der Liste, umfassend:
□ Abfräsen der obersten Außenfläche auf Seiten der vorderseitigen Oberfläche (11) und/oder der rückseitigen Oberfläche (12),
□ Abschleifen der obersten Außenfläche auf Seiten der vorderseitigen Oberfläche (11) und/oder der rückseitigen Oberfläche (12),
□ Absägen der obersten Außenfläche auf Seiten der vorderseitigen Oberfläche (11) und/oder der rückseitigen Oberfläche (12).

Die Bestimmung der anfängliche Dicke (D₁) der Kunststoffschaumplatte (10) erfolgt dann nach dieser Oberflächenbehandlung.

Die Kunststoffschaumplatten (10) können bei Raumtemperatur gepresst werden. Allerdings bewirkt eine Temperierung der Platte bis ca. 70° C vor der Pressung deutlich bessere Ergebnisse und eine kürzere Pressungszeit. Aus diesem Grund umfasst das Verfahren erfindungsgemäß vordem Pressen ein Aufheizen der zugeführten Kunststoffschaumplatten (10). Dabei wird das Aufheizen der Kunststoffschaumplatten (10) derart durchgeführt, dass die Kunststoffschaumplatten (10) vor ihrem Pressen eine Oberflächentemperatur in einem Bereich zwischen 50°C und 75°C aufweisen.

Das Pressverfahren kann beispielsweise unter Verwendung einer hydraulischer Pressaggregate erfolgen. In diesem Fall empfiehlt es sich, die zugeführte Kunststoffschaumplatte (10) zu einer möglichst geringen Dicke (D₃) zu pressen, sodass die gewünschte endgültige Dicke (D₂) gemäß irreversibler Stauchung durch die Presszeit reguliert wird. Der im Einzelfall zu wählende Druck und die erforderliche Zeit, die bei der Pressung erforderlich ist, hängen vor allem von der Art und den Eigenschaften des Schaums, der anfänglichen Dicke (D₁) der zugeführten Kunststoffschaumplatte (10) und der gewünschten Stauchung ab, weshalb sie sehr variieren. Der bevorzugte Druck liegt aus diesem Grund innerhalb eines sehr großen Bereichs zwischen 1 und 100 kg/cm² und weiter bevorzugt zwischen 5 und 50 kg/cm², jeweils bezogen auf die Oberfläche der Platte und die Druckzeit, die bevorzugt zwischen 1 Sekunde und 10 Minuten liegt.

Ganz besonders bevorzugt im Sinne der vorliegenden Erfindung ist jedoch - auch mit Blick auf eine kontinuierliche Produktion - das Pressen der flächigen Kunststoffschaumplatten (10) mittels oberseitig und/oder unterseitig anliegender Pressrollen (13). Dabei ist es möglich, nur jeweils eine, dann etwas größer dimensionierte Pressrolle zu nutzen, insbesondere ist die Verwendung einer so genannten "Roll-Out"-Verfahrenslinie (3) bevorzugt, bei der oberseitig und unterseitig eine Vielzahl bevorzugt angetriebener Pressrollen (13) zum Einsatz kommen, die einzeln und/oder innerhalb eines Vielfach-Lagerrahmens angelegt oder abgefahren werden können.

Insbesondere mit Blick auf Umweltschutzaspekte und/oder aus ekonomischen Gründen wird der Verfahrensschritt des Pressens innerhalb einer Einhausung (5) durchgeführt wird zur Sammlung, kontrollierter Abführung und gegebenenfalls im Rahmen einer bevorzugten Ausführung auch zur Wiederverwendung ausgepresster Treibmittel aus den Kunststoffschaumplatten (10). Dieses kann auch geschehen, um bestimmte Treibmittel, die ausgezeichnete Schaumeigenschaften ermöglichen und deren Verwendung in den letzten Jahren aus Umweltschutzgründen untersagt wurde, wie beispielsweise CFC- (Chlorfluorkohlenstoff) und HCFC- (hydrogenierter Chlorfluorkohlenstoff) Treibgase, doch wieder nutzen zu können.

In Reflexion auf den vorherigen Absatz gelten für das hier vorgeschlagene Verfahren praktisch alle bekannten Treibmittel für die Kunststoffschaumherstellung als geeignet, insbesondere dabei:
▪ Anorganische Treibmittel, wie beispielsweise: Kohlenstoffdioxide, Nitrogen, Luft, Argon, Helium, Wasser.
▪ Organische Treibmittel, wie beispielsweise: Methan, Ethanol, Propan, n-Butan, Isobutan, n-Pentan, Neopentan, Cyclobutan, Cyclopentan, Difluorethan (HFC-152 a), Tetrafluorethan (HFC -134), Difluorethan (HCFC 142 b), Chlorodifluoromethan (HCFC 22).
▪ Chemische Treibmittel, wie beispielsweise: Azodicarbonamid, P-toluene.

Um eine wesentliche Optimierung innerhalb der Produktion für die hier vorgeschlagenen Kunststoffschaumplatten (10) zu erreichen, ist es denkbar und gilt als bevorzugt, das optionale Zuführen zu einem Pressaggregat, das Pressen, die optionale Oberflächenbehandlung und das Aufheizen der Kunststoffschaumplatten (10) zu integrieren in ein Verfahren zur Herstellung der Kunststoffschaumplatten (10). Dabei nutzt man außerdem die Energie der noch warmen Originalplatte zu einer effizienteren Pressung und zu besseren Resultaten. Dem Verfahrensschritt des Pressens kann sich dann zusätzlich noch die Konfektionierung der Kunststoffschaumplatten (10) mit Schneiden und Verpacken anschließen.

Die vorliegende Erfindung bezieht sich nicht nur auf ein Verfahren zur Bearbeitung von flächigen XPS oder EBS Kunststoffschaumplatten (10) gemäß Anspruch 1. Im gleichen Maße vorgeschlagen wird auch eine nach diesem Verfahren hergestellte flächige XPS oder EBS Kunststoffschaumplatte (10), gemäß Anspruch 10.

Als Kunststoff zur Ausbildung der Kunststoffschaumplatte (10) bieten sich neben dem besonders bevorzugten Polystyrol auch solche Kunststoffe an, ausgesucht aus der Liste, umfassend: Polyvinylchloride, Polyolefine, Polykarbonate, Polyurethane, Polymethylmethacrylate, Kautschuk, Phenole, Polyester bzw. Mischungen daraus und mit Polystyrol.

In bevorzugter Ausführungsform enthält die Kunststoffschaumplatte (10) Additive, einzeln oder in Kombination untereinander ausgewählt aus der Gruppe, umfassend: Ruß, Grafit, Titaniumdioxid, Talkum, Kalziumkarbonat, Kaolin, Kalziumstearat, Magnesiumoxid, Hexabromocyclododekan, Triphenylphosphat. Gerade bei dem Zusatz von Ruß und/oder Grafit lassen sich so die Wärmeisolationseigenschaften der vorgeschlagenen Kunststoffschaumplatte (10) verbessern. Genauso können durch diese oder die anderen genannten Additive insbesondere in Verbindung mit dem vorgeschlagenen Pressverfahren auch andere physikalische und/oder mechanische Eigenschaften der Kunststoffschaumplatte (10) mehr oder weniger modifiziert werden, wozu unter anderem die Eigenschaften Druckfestigkeit, Biegefestigkeit, Wasseraufnahme, Feuerbeständigkeit, dimensionale Stabilität gehören.

Um eine Platte einer bestimmten Dicke zu produzieren, kann man eine einzelne dickere Kunststoffschaumplatte (10) zur gewünschten Dicke pressen. Es hat sich jedoch erwiesen, dass es leichter und praktischer ist, dünnere Kunststoffschaumplatte (10) zu pressen und die gewünschte Plattendicke durch Doppelung bzw. allgemein durch Mehrfachstapelung zu erzielen; somit gilt es als bevorzugte Ausführungsform der vorgeschlagenen Kunststoffschaumplatte (10), diese mit einer zweiten gleich ausgebildeten flächigen Kunststoffschaumplatte (10) unlöslich - beispielsweise durch Verklebung und/oder durch Oberflächenverzahnung - zu verbinden. Man erreicht durch diese Mehrfachstapelung eine bedeutend niedrigere Wärmeleitfähigkeit des Stapelverbundes als dieses möglich ist mit einer gleichdicken, jedoch ungestapelt ausgebildeten Kunststoffschaumplatte, wobei außerdem die Stauchung der Schaumzellen durch die jeweils geringere Plattendicke innerhalb des Stapelverbundes homogener wird. Mikroskopische Untersuchungen im Rahmen der gemachten Erfindung zeigten, dass die Schaumzellen durch die Pressung nicht zerstört, sondern nur gestaucht und verformt werden. Bevorzugte Bereiche für die Zellengröße von gestauchten Polystyrolschaumplatten nach dem hier vorgeschlagenen Verfahren liegen in einem Bereich von 0,001 mm bis 0,1 mm.

Es gilt als eine weitere bevorzugte Ausführung der vorgeschlagenen Kunststoffschaumplatte (10), wenn diese flächige Kunststoffschaumplatte (10) mit einer weiteren Platte aus mindestens einem anderen Werkstoff unlöslich verbunden ist.

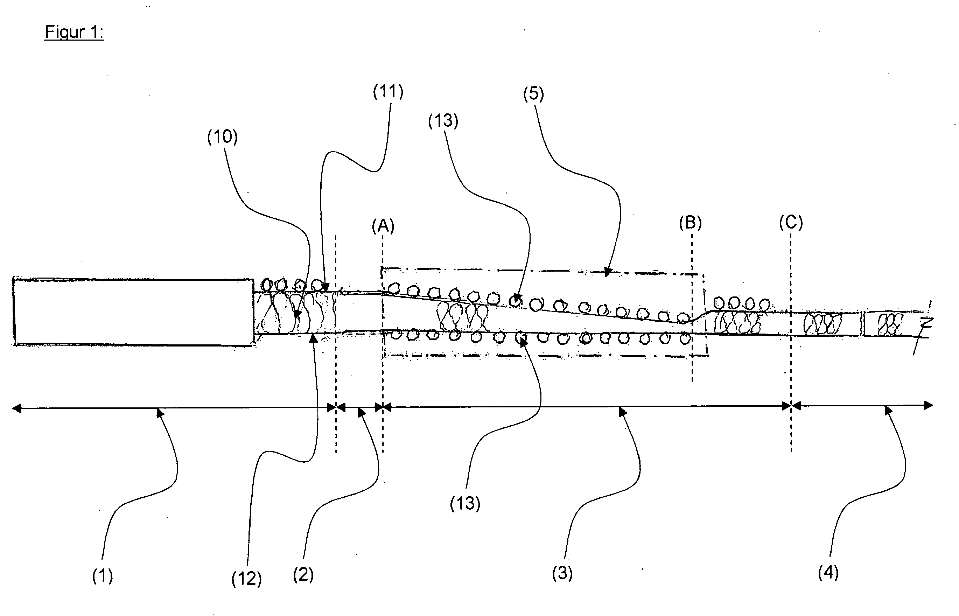

Figur 1 soll die gemachte Erfindung weitergehend verdeutlichen. Dargestellt ist eine beispielhafte, das hiesige Anspruchsbegehren nicht einschränkende Maschine zur kontinuierlichen Produktion von Kunststoffschaumplatten (10), beginnend mit einer Produktionslinie (1) für derartige Kunststoffschaumplatten (10), der sich ein Abschnitt (2) anfügt, innerhalb dessen die jeweils oberste Außenfläche sowohl auf Seiten der vorderseitigen Oberfläche (11) wie auch auf Seiten der rückseitigen Oberfläche (12) behandelt, hier abgefräst wird. Am Ende dieses Bereiches (2) wird an der Position (A) die anfängliche Dicke (D₁) der zugeführten flächigen Kunststoffschaumplatte (10) im dargestellten Fall mit 80 mm bestimmt. Es folgt eine "Roll-Out"-Verfahrenslinie (3), bei der oberseitig und unterseitig der zugeführten flächigen Kunststoffschaumplatte (10) eine Vielzahl hier durch Ketten angetriebene Pressrollen (13) zum Einsatz kommen, die einzeln und hier zusätzlich innerhalb eines Vielfach-Lagerrahmens angelegt oder abgefahren werden können. Der Bereich anlegbarer bzw. hier dargestellt tatsächlich angelegter Pressrollen (13) erstreckt sich hier auf eine Länge von 20 Metern bei einer bevorzugten Produktionsgeschwindigkeit in einem Bereich von 0,1 bis 30 m/min, ganz besonders bevorzugt in einem Bereich von 1,5 bis 15 m/min. Die Pressrollen (13) haben dabei einen bevorzugten Außendurchmesser in einem Bereich von 4 bis 8 cm und sind im dargestellten Fall nicht beheizt, was aber grundsätzlich auch möglich ist gemäß einer vorne beschriebenen Ausführungsform. Der gesamte Bereich, in dem die zugeführte Kunststoffschaumplatte (10) durch die Pressrollen (13) gestaucht wird, ist mittels einer Einhausung (5) umschlossen, zur Sammlung, kontrollierter Abführung und Wiederverwendung ausgepresster Treibmittel aus der Kunststoffschaumplatte (10). Gleichzeitig wird deren Dicke (D₃) unmittelbar am Ende des Pressvorgangs an der Position (B) bestimmt. Es folgt am Ende der Presszone die erneute Ausdehnung der Kunststoffschaumplatte (10), beginnend bei der Dicke unmittelbar am Ende des Pressvorgangs (D₃) bis zur dauerhaft gehaltenen Dicke (D₂) gemäß irreversibler Stauchung, bei der Luft in die Zellen des aufgeschäumten Kernmaterials einströmt. Schließlich ist am Ende der dargestellten Maschine ein Bereich angedeutet, in dem sich die abschließende Konfektionierung (4) befindet.

Durch die "Roll-out"-Pressung wird erfindungsgemäß die Plattendicke reduziert, wobei sich die die Platte gleichzeitig in Längs- und Querrichtung ausdehnt. Aus diesem Grund wird sich die Dichte der gestauchten Platte nicht sehr erhöhen. Beispielhaft erhöht sich die Dichte einer Platte nach einer "Roll-out"-Pressung bei vorheriger Aufheizung auf 70°C nur um 12 %, während gleichzeitig die Dicke (D₂) auf 70% der anfänglichen Dicke (D₁) und die Wärmeleitfähigkeit λ um 22 % reduziert werden konnte.

Die vorliegende Erfindung soll durch die nachfolgenden Beispiele weitergehend veranschaulicht werden, wobei die Herstellung der hier vorgestellten Kunststoffschaumplatten auf einer Maschine erfolgt, wie sie in der Figur 1 schematisch vorgestellt wird.

Beispiel 1: Eine XPS- Kunststoffschaumplatte mit einer anfängliche Dicke (D₁) von 73,40 mm und einer anfänglichen Dichte von 34,2 kg/m³, die mit dem Treibmittel HFC-152 a hergestellt wurde, wird zu einer Dicke (D₂) gemäß irreversibler Stauchung von 40,42 mm gepresst. Tabelle 1 umfasst die daraus resultierenden Ergebnisse.

**Tabelle 1:**

| | Original XPS Platte | XPS Platte (erfindungsgemäßes Verfahren) |
|---|---|---|
| Dicke mm | 73,42 | 40,54 |
| λ - W/mK | 0,0368 (nach Alterung) | 0,0281 |
| λ -Wert Reduzierung | | 23,64% |

| | | |
|---|---|---|
| * λ = Wärmeleitfähigkeitswert bei 10 ° C | | |

Beispiele 2: Eine XPS- Kunststoffschaumplatte mit einer anfängliche Dicke (D₁) von 48,88 mm und einer anfänglichen Dichte von 35,5 kg/m³, die mit CO₂ als Treibmittel hergestellt wurde, wird zu unterschiedlichen Dicken (D₂) gemäß irreversibler Stauchung gepresst. Tabelle 2 enthält die Ergebnisse.

**Tabelle 2:**

| | Original XPS Platte | XPS Platte (erfindungsgemäßes Verfahren) | | | | | |
|---|---|---|---|---|---|---|---|
| Dicke mm | 48,88 | 46,94 | 42,93 | 36,77 | 35,60 | 33,73 | 32,14 |
| λ - W/mK | 0,0392 (nach Alterung) | 0,0388 | 0,0372 | 0,0337 | 0,0333 | 0,0330 | 0,0322 |
| λ -Wert Reduzierung | | 1% | 5,1% | 14% | 15,1% | 15,8% | 17,9% |

Beispiel 3: Zwei XPS- Kunststoffschaumplatten mit einer anfängliche Dicke (D₁) von jeweils 26,67 mm und einer jeweiligen anfänglichen Dichte von 36,6 kg/m³, die mit dem Treibmittel HFC-152 a hergestellt wurden, werden einzeln zu unterschiedlichen Dicken (D₂) gemäß irreversibler Stauchung gepresst und zusammengeklebt. Tabelle 3 umfasst die Ergebnisse.

**Tabelle 3:**

| | Original XPS Platte | XPS Platte (erfindungsgemäßes Verfahren) | | | |
|---|---|---|---|---|---|
| Dicke mm | 2 x 26.67 = 53.34 | 44,06 | 36,96 | 33,71 | 21,07 |
| λ - W/mK | 0,0290 (nach Alterung) | 0,0242 | 0,0222 | 0,0216 | 0,0214 |
| λ -Wert Reduzierung | | 16,6% | 23,4% | 25,5% | 26,2% |

Beispiel 4: Eine EBS- Kunststoffschaumplatte mit einer anfängliche Dicke (D₁) von 100,32 mm und einer anfängliche Dichte von 29,50 kg/m³ wurde zu unterschiedlichen Dicken (D₂) gemäß irreversibler Stauchung gepresst. Die Ergebnisse sind in Tabelle 4 zusammengefasst.

**Tabelle 4:**

| | Original EBS Platte | EBS Platte (erfindungsgemäßes Verfahren) | | |
|---|---|---|---|---|
| Dicke mm | 100,32 | 65,81 | 49,76 | 23,57 |
| 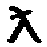 - W/mK | 0,0338 (nach Alterung) | 0,0311 | 0,0306 | 0,0306 |
| 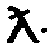 -Wert Reduzierung | | 8% | 9,5% | 9,5% |

Beispiel 5: Eine XPS- Kunststoffschaumplatte mit einer anfängliche Dicke (D₁) von 51,20 mm und einer anfänglichen Dichte von 35,2 kg/m³, die mit dem Treibmittel HFC-152 a hergestellt wurde, wird zu unterschiedlichen Dicken (D₂) gemäß irreversibler Stauchung gepresst. Tabelle 5 enthält die Ergebnisse.

**Tabelle 5:**

| | Original XPS Platte | XPS Platte (erfindungsgemäßes Verfahren) | | | |
|---|---|---|---|---|---|
| Dicke mm | 51,20 | 40,96 | 33,07 | 30,87 | 16,23 |
| λ - W/mK | 0,0330 (nach Alterung) | 0,0285 | 0,0239 | 0,0239 | 0,0304 |
| λ - Wert Reduzierung | | 13,6% | 27,6% | 27,6% | 7,9% |

Die Beispiele zeigen eindrucksvoll, dass die zugrundeliegende Aufgabe, eine möglichst einfache und ökonomische Lösung zu finden, um die Wärmeleitfähigkeit traditioneller Kunststoffschaumplatten zu vermindern und demzufolge höhere Energieeinsparungen bei geringerer Dicke zu erreichen, hervorragend gelöst wurde.

### Begriffsliste:

- (1): Originalschaumplattenproduktionslinie
- (2): Originalschaumplatten-Oberflächenhautentfernung
- (3): "Roll-Out"-Verfahrenslinie
- (4): Konfektionierung
- (5): Einhausung
- (10): Kunststoffschaumplatte
- (11): vorderseitige Oberfläche
- (12): rückseitige Oberfläche
- (13): Pressrollen
- (A): Bestimmungsposition von (D₁)
- (B): Bestimmungsposition von (D₃)
- (C): Bestimmungsposition von (D₂)
- (D₁): anfängliche Dicke der Kunststoffschaumplatte (10)
- (D₂): Dicke der Kunststoffschaumplatte (10) nach deren irreversiblen Stauchung
- (D₃): Dicke der Kunststoffschaumplatte (10) mit reversibler und irreversibler Stauchung

## Patentansprüche

1. Verfahren zur Bearbeitung von flächigen XPS oder EBS Kunststoffschaumplatten (10), die flächigen XPS oder EBS Kunststoffschaumplatten (10) aufweisen:
▪ eine vorderseitige Oberfläche (11) und eine der vorderseitigen Oberfläche (11) gegenüberliegende rückseitige Oberfläche (12),
▪ eine durch die vorder- und rückseitige Oberfläche (11, 12) begrenzte anfängliche Dicke (D₁),
wobei das Verfahren das Pressen der flächigen XPS oder EBS Kunststoffschaumplatten (10) in deren Dickenrichtung umfasst und wobei das Pressen
∘ eine reversible Stauchung und eine irreversible Stauchung der flächigen XPS oder EBS Kunststoffschaumplatten (10) bewirkt, wobei die Dicke unmittelbar nach dem Pressvorgang (D₃) beträgt und nach dem Entfernen der Pressflächen die Dicke der flächigen XPS oder EBS Kunststoffschaumplatten (10) den Wert (D₂) annimmt, wobei (D₃) < (D₂) < (D₁),
**dadurch gekennzeichnet,**
**dass** das Verfahren vor dem Pressen ein Aufheizen der zugeführten XPS oder EBS Kunststoffschaumplatten (10) umfasst, wobei das Aufheizen der XPS oder EBS Kunststoffschaumplatten (10) derart durchgeführt wird, dass die XPS oder EBS Kunststoffschaumplatten (10) eine Oberflächentemperatur in einem Bereich zwischen 50°C und 75°C aufweisen, und
**dass** die Schaumzellen durch die Pressung nicht zerstört, sondern gestaucht und verformt werden.

2. Verfahren nach Patentanspruch 1, **dadurch gekennzeichnet, dass** die irreversible Stauchung in einem Bereich von größer 0% bis einschließlich 80% der anfängliche Dicke (D₁) der gepressten flächigen XPS oder EBS Kunststoffschaumplatte (10) liegt.

3. Verfahren nach einem der Patentansprüche 1 und 2, **dadurch gekennzeichnet, dass** die irreversible Stauchung in einem Bereich von einschließlich 10% bis einschließlich 40% der anfängliche Dicke (D₁) der gepressten flächigen XPS oder EBS Kunststoffschaumplatte (10) liegt.

4. Verfahren nach einem der Patentansprüche 1 bis 3, **dadurch gekennzeichnet, dass** das Verfahren vor dem Pressen eine Oberflächenbehandlung der zugeführten XPS oder EBS Kunststoffschaumplatten (10) umfasst, wobei die Oberflächenbehandlung ein Verfahrensschritt ist, ausgesucht aus der Liste, umfassend:
□ Abfräsen der obersten Außenfläche auf Seiten der vorderseitigen Oberfläche (11) und/oder der rückseitigen Oberfläche (12),
□ Abschleifen der obersten Außenfläche auf Seiten der vorderseitigen Oberfläche (11) und/oder der rückseitigen Oberfläche (12),
□ Absägen der obersten Außenfläche auf Seiten der vorderseitigen Oberfläche (11) und/oder der rückseitigen Oberfläche (12).

5. Verfahren nach einem der Patentansprüche 1 bis 4, **dadurch gekennzeichnet, dass** bei der irreversiblen Stauchung der XPS oder EBS Kunststoffschaumplatten (10) die Zellengröße in Richtung der Plattendicke kleiner und in Richtung der Plattenebene größer wird.

6. Verfahren nach einem der Patentansprüche 1 bis 5, **dadurch gekennzeichnet, dass** das Pressen der flächigen XPS oder EBS Kunststoffschaumplatten (10) mittels hydraulischer Pressaggregate durchgeführt wird.

7. Verfahren nach einem der Patentansprüche 1 bis 5, **dadurch gekennzeichnet, dass** das Pressen der flächigen XPS oder EBS Kunststoffschaumplatten (10) mittels oberseitig und/oder unterseitig anliegender Pressrollen (13) durchgeführt wird.

8. Verfahren nach einem der Patentansprüche 1 bis 7, **dadurch gekennzeichnet, dass** der Verfahrensschritt des Pressens innerhalb einer Einhausung (5) durchgeführt wird zur Sammlung und kontrollierter Abführung ausgepresster Treibmittel aus den XPS oder EBS Kunststoffschaumplatten (10).

9. Verfahren nach einem der Patentansprüche 1 bis 8, **dadurch gekennzeichnet, dass** das Pressen, die Oberflächenbehandlung und das Aufheizen der XPS oder EBS Kunststoffschaumplatten (10) integriert sind in ein Verfahren zur Herstellung der XPS oder EBS Kunststoffschaumplatten (10).

10. Flächige XPS oder EBS Kunststoffschaumplatte (10), hergestellt nach einem Verfahren der Ansprüche 1 bis 8, aufweisend:
▪ eine vorderseitige Oberfläche (11) und eine der vorderseitigen Oberfläche (11) gegenüberliegende rückseitige Oberfläche (12),
▪ ausgehend von einer anfänglichen Dicke (D₁), einedie vorder- und rückseitige Oberfläche (11, 12) begrenzende, durch irreversible Stauchung mittels Pressen reduzierte Dicke (D₂) < (D₁) aufweist,
▪ aufgeschäumtes Kernmaterial mit gasgefüllten Zellen,
**dadurch gekennzeichnet, dass** die XPS oder EBS Kunststoffschaumplatte (10) durch Pressung unter vorherigem Aufheizen auf eine Oberflächentemperatur in einem Bereich zwischen 50°C und 75°C nicht zerstörte, sondern nur gestauchte und verformte Schaumzellen aufweist.

11. Flächige XPS oder EBS Kunststoffschaumplatte (10) nach Patentanspruch 10, **dadurch gekennzeichnet, dass** die gasgefüllten Zellen des aufgeschäumten Kernmaterials ein Treibmittel freies Füllgas enthalten.

12. Flächige XPS oder EBS Kunststoffschaumplatte (10) nach Patentanspruch 11, **dadurch gekennzeichnet, dass** das Treibmittel freie Füllgas Luft ist.

13. Flächige XPS oder EBS Kunststoffschaumplatte (10) nach einem der Patentansprüche 10 bis 12, **dadurch gekennzeichnet, dass** die XPS oder EBS Kunststoffschaumplatte (10) Additive enthält, einzeln oder in Kombination untereinander ausgewählt aus der Gruppe, umfassend: Ruß, Grafit, Titaniumdioxid, Talkum, Kalziumkarbonat, Kaolin, Kalziumstearat, Magnesiumoxid, Hexabromocyclododekan, Triphenylphosphat.

14. Flächige XPS oder EBS Kunststoffschaumplatte (10) nach einem der Patentansprüche 10 bis 13, **dadurch gekennzeichnet, dass** diese flächige XPS oder EBS Kunststoffschaumplatte (10) mit einer zweiten gleich ausgebildeten flächigen XPS oder EBS Kunststoffschaumplatte (10) unlöslich verbunden ist.

15. Flächige XPS oder EBS Kunststoffschaumplatte (10) nach einem der Patentansprüche 10 bis 14, **dadurch gekennzeichnet, dass** diese flächige XPS oder EBS Kunststoffschaumplatte (10) mit einer weiteren Platte aus mindestens einem anderen Werkstoff unlöslich verbunden ist.

## Claims

1. Method for processing planar XPS or EBS plastic foam boards (10), the planar XPS or EBS plastic foam boards (10) having:
▪ a front surface (11) and a back surface (12) opposite the front surface (11),
▪ an initial thickness (D₁) delimited by the front and back surface (11, 12),
the method comprising the pressing of the planar XPS or EBS plastic foam boards (10) in the thickness direction thereof and the pressing
□ causing a reversible compression and an irreversible compression of the planar XPS or EBS plastic foam boards (10), the thickness being (D₃) immediately after the pressing operation and the thickness of the planar XPS or EBS plastic foam boards (10) assuming the value (D₂) after the removal of the pressing surfaces, where (D₃) < (D₂) < (D₁).
**characterised**
**in that** the method comprises a heating of the supplied XPS or EBS plastic foam boards (10) before the pressing, the heating of the XPS or EBS plastic foam boards (10) being carried out in such a way that the XPS or EBS plastic foam boards (10) have a surface temperature in a range between 50°C and 75°, and
**in that** the foam cells are not destroyed by the pressing, but compressed and deformed.

2. Method according to claim 1, **characterised in that** the irreversible compression lies in a range from greater than 0% up to and including 80% of the initial thickness (D₁) of the pressed planar XPS or EBS plastic foam board (10).

3. Method according to claims 1 and 2, **characterised in that** the irreversible compression lies in a range from including 10% up to and including 40% of the initial thickness (D₁) of the pressed planar XPS or EBS plastic foam board (10).

4. Method according to one of claims 1 to 3, **characterised in that** the method comprises a surface treatment of the supplied XPS or EBS plastic foam boards (10) before the pressing, the surface treatment being a method step selected from the list comprising:
□ milling off the top outer surface on the front surface (11) and/or on the back surface (12),
□ grinding off the top outer surface on the front surface (11) and/or on the back surface (12),
□ sawing off the top outer surface on the front surface (11) and/or on the back surface (12).

5. Method according to one of claims 1 to 4, **characterised in that** in the irreversible compression of the XPS or EBS plastic foam boards (10) the cell size becomes smaller in the direction of the board thickness and larger in the direction of the board plane.

6. Method according to one of claims 1 to 5, **characterised in that** the pressing of the planar XPS or EBS plastic foam boards (10) is carried out by means of hydraulic pressing units.

7. Method according to one of claims 1 to 5, **characterised in that** the pressing of the planar XPS or EBS plastic foam boards (10) is carried out by means of pressing rollers (13) bearing on the top side and/or on the bottom side.

8. Method according to one of claims 1 to 7, **characterised in that** the method step of pressing is carried out within an enclosure (5), for the purpose of collecting and controlled removal of pressed-out blowing agent from the XPS or EBS plastic foam boards (10).

9. Method according to one of claims 1 to 8, **characterised in that** the pressing, the surface treatment and the heating of the XPS or EBS plastic foam boards (10) are integrated in a method for producing the XPS or EBS plastic foam boards (10).

10. Planar XPS or EBS plastic foam board (10), produced according to a method of claims 1 to 8, having:
▪ a front surface (11) and a back surface (12) opposite the front surface (11),
▪ starting from an initial thickness (D₁) has, reduced by irreversible compression by means of pressing, a thickness (D₂) < (D₁) delimiting the front and back surface (11, 12),
▪ foamed core material with gas-filled cells,
**characterised in that** the XPS or EBS plastic foam board (10) has foam cells not destroyed, but only compressed and deformed by pressing under previous heating to a surface temperature in a range between 50°C and 75°C.

11. Planar XPS or EBS plastic foam board (10) according to claim 10, **characterised in that** the gas-filled cells of the foamed core material contain a blowing agent-free filling gas.

12. Planar XPS or EBS plastic foam board (10) according to claim 11, **characterised in that** the blowing agent-free filling gas is air.

13. Planar XPS or EBS plastic foam board (10) according to one of claims 10 to 12, **characterised in that** the XPS or EBS plastic foam board (10) contains additives, individually or in combination with one another selected from the group comprising: carbon black, graphite, titanium dioxide, talc, calcium carbonate, kaolin, calcium stearate, magnesium oxide, hexabromocyclododecane, triphenyl phosphate.

14. Planar XPS or EBS plastic foam board (10) according to one of claims 10 to 13, **characterised in that** this planar XPS or EBS plastic foam board (10) is non-detachably connected to a second planar XPS or EBS plastic foam board (10) of the same form.

15. Planar XPS or EBS plastic foam board (10) according to one of claims 10 to 14, **characterised in that** this planar XPS or EBS plastic foam board (10) is non-detachably connected to a further board made of at least one other material.

## Revendications

1. Procédé servant à usiner des plaques de mousse synthétique XPS ou EBS (10) plates, lesdites plaques de mousse synthétique XPS ou EBS (10) présentant :
- une surface côté avant (11) et une surface côté arrière (12) en vis-à-vis de la surface côté avant (11),
- une épaisseur (D₁) initiale limitée par la surface côté avant et la surface côté arrière (11, 12),
sachant que le procédé comprend le pressage des plaques en mousse synthétique XPS ou EBS (10) plates dans la direction de leur épaisseur et sachant que le pressage
- entraîne un écrasement réversible et un écrasement irréversible des plaques en mousse synthétique XPS ou EBS (10) plates, sachant que l'épaisseur présente, immédiatement après l'opération de pressage, une valeur (D₃) et que l'épaisseur des plaques en mousse synthétique XPS ou EBS (10) plates adopte, après le retrait des faces de pressage, la valeur (D₂), sachant que (D₃) < (D₂) < (D₁),
**caractérisé en ce**
**que** le procédé comprend, avant le pressage, un chauffage des plaques en mousse synthétique XPS ou EBS (10) amenées, sachant que le chauffage des plaques en mousse synthétique XPS ou EBS (10) est réalisé de telle manière que les plaques en mousse synthétique XPS ou EBS (10) présentent une température de surface située dans une plage comprise entre 50 °C et 75 °C, et
en ce que les cellules de mousse ne sont pas détruites, mais sont écrasées et déformées par l'action de pression.

2. Procédé selon la revendication 1, **caractérisé en ce que** l'écrasement irréversible se situe dans une plage supérieure à 0 % allant jusqu'à 80 %, inclus, de l'épaisseur (D₁) initiale de la plaque en mousse synthétique XPS ou EBS (10) plate pressée.

3. Procédé selon l'une quelconque des revendications 1 et 2, **caractérisé en ce que** l'écrasement irréversible se situe dans une plage allant de 10 % jusqu'à 40 %, inclus, de l'épaisseur (D₁) initiale de la plaque en mousse synthétique XPS ou EBS (10) plate pressée.

4. Procédé selon l'une quelconque des revendications 1 à 3, **caractérisé en ce que** le procédé comprend, avant le pressage, un traitement des surfaces des plaques en mousse synthétique XPS ou EBS (10) amenées, sachant que le traitement des surfaces est une étape de procédé choisie parmi la liste comprenant les opérations suivantes consistant à :
- fraiser la surface extérieure la plus haute sur des côtés de la surface côté avant (11) et/ou de la surface côté arrière (12),
- poncer la surface extérieure la plus haute sur des côtés de la surface côté avant (11) et/ou de la surface côté arrière (12),
- scier la surface extérieure la plus haute sur des côtés de la surface côté avant (11) et/ou de la surface côté arrière (12).

5. Procédé selon l'une quelconque des revendications 1 à 4, **caractérisé en ce que**, lors de l'écrasement irréversible, les plaques en mousse synthétique XPS ou EBS (10), la grandeur de cellules est plus petite en direction de l'épaisseur de plaque et plus grande en direction du plan de plaque.

6. Procédé selon l'une quelconque des revendications 1 à 5, **caractérisé en ce que** le pressage des plaques en mousse synthétique XPS ou EBS (10) plates est effectué au moyen de groupes de pressage hydrauliques.

7. Procédé selon l'une quelconque des revendications précédentes 1 à 5, **caractérisé en ce que** le pressage des plaques en mousse synthétique XPS ou EBS (10) plates est effectué au moyen de galets de pressage (13) reposant côté supérieur et/ou côté inférieur.

8. Procédé selon l'une quelconque des revendications 1 à 7, **caractérisé en ce que** l'étape de procédé du pressage est effectuée à l'intérieur d'une enceinte (5) servant à collecter et à évacuer de manière contrôlée des agents porogènes pressés issus des plaques en mousse synthétique XPS ou EBS (10).

9. Procédé selon l'une quelconque des revendications 1 à 8, **caractérisé en ce que** le pressage, le traitement des surfaces et le chauffage des plaques en mousse synthétique XPS ou EBS (10) sont intégrés dans un procédé servant à fabriquer les plaques en mousse synthétique XPS ou EBS (10).

10. Plaque de mousse synthétique XPS ou EBS (10) plate, fabriquée selon un procédé des revendications 1 à 8, présentant :
- une surface côté avant (11) et une surface côté arrière (12) en vis-à-vis de la surface côté avant (11) ;
- en partant d'une épaisseur (D₁) initiale, une épaisseur (D₂) < (D₁) délimitant la surface côté avant et la surface côté arrière (11, 12) et réduite par écrasement irréversible au moyen d'un pressage,
- un matériau central expansé comprenant des cellules remplies de gaz,
**caractérisée en ce que** la plaque en mousse synthétique XPS ou EBS (10) présente, du fait de la pression, dans des conditions de chauffage préalable à une température de surface située dans une plage comprise entre 50 °C et 75 C, des cellules de mousse, qui n'ont pas été détruites, mais seulement écrasées et déformées.

11. Plaque en mousse synthétique XPS ou EBS (10) plate selon la revendication 10, **caractérisée en ce que** les cellules remplies de gaz du matériau central expansé contiennent un gaz de remplissage sans agent porogène.

12. Plaque en mousse synthétique XPS ou EBS (10) plate selon la revendication 11, **caractérisée en ce que** le gaz de remplissage sans agent porogène est l'air.

13. Plaque en mousse synthétique XPS ou EBS (10) plate selon l'une quelconque des revendications 10 à 12, **caractérisée en ce que** la plaque en mousse synthétique XPS ou EBS (10) contient des additifs, choisis, séparément ou en combinaison les uns avec les autres, parmi le groupe, comprenant : de la suie, du graphite, du dioxyde de titanium, du talc, du carbonate de calcium, du kaolin, du stéarate de calcium, de l'oxyde de magnésium, de l'hexabromocyclododécane, du phosphate de triphényle.

14. Plaque en mousse synthétique XPS ou EBS (10) plate selon l'une quelconque des revendications 10 à 13, **caractérisée en ce que** ladite plaque en mousse synthétique XPS ou EBS (10) plate est reliée de manière inséparable à une deuxième plaque en mousse synthétique XPS ou EBS (10) plate réalisée de manière identique.

15. Plaque en mousse synthétique XPS ou EBS (10) plate selon l'une quelconque des revendications 10 à 14, **caractérisée en ce que** ladite plaque en mousse synthétique XPS ou EBS (10) plate est reliée de manière inséparable à une autre plaque composée au moins d'un autre matériau.
